# EUROPEAN PATENT APPLICATION

(11) **EP 1 100 093 A2**
(43) Date of publication of application: **16.05.2001**
(21) Application number: 00124627.1
(22) Date of filing: 10.11.2000
(51) Int. Cl.: H01B 3/44, H01B 7/295

(54) **Flame-resistant resin composition and electric wire having a layer thereof**

(30) Priority: 12.11.1999 JP 32295799; 22.02.2000 JP 2000045206; 24.02.2000 JP 2000046955; 18.07.2000 JP 2000217101
(71) Applicant: Mitsubishi Cable Industries, Ltd., Amagasaki-shi Hyogo 660-0856 (JP)
(72) Inventor: Ashida, Keiko, c/o Mitsubishi Cable Industries Ltd, Amagasaki-shi, Hyogo 660-0856 (JP); Miyashita, Yoshitsugu, c/o Mitsubishi Cable Ind., Amagasaki-shi, Hyogo 660-0856 (JP); Fujita, Nozomu, c/o Mitsubishi Cable Industrie Ltd, Amagasaki-shi, Hyogo 660-0856 (JP); Ueda, Yoshiaki, c/o Mitsubishi Cable Industrie Ltd, Amagasaki-shi, Hyogo 660-0856 (JP); Ogura, Kazuyuki, c/o Mitsubishi Cable Industrie, Amagasaki-shi, Hyogo 660-0856 (JP)
(74) Representative: Weber, Thomas, Dr. Dipl.-Chem.

(57) **Abstract**

The present invention provides:
a flame-resistant resin composition containing Component A: a polyolefin resin, Component B: an acid anhydride-modified polyolefin resin, Component C: at least one member selected from the group consisting of magnesium hydroxide surface-treated with a fatty acid and magnesium hydroxide surface-treated with a coupling agent, and Component D: a rubber without halogen, and a flame-resistant resin composition containing Component A1: a low-density polyethylene obtained by polymerization using a metallocene catalyst, Component A2: high-pressure-produced low-density polyethylene, and Component C1: an inorganic metal compound. The flame-resistant resin composition of the present invention is particularly useful as a coating material for an electric wire, and can be used to form a coating layer, such as a sheath layer, an insulating layer and the like.

## Description

### TECHNICAL FIELD OF THE INVENTION

The present invention relates to a flame-resistant resin composition, which is suitable as a coating material for an electric wire and is used for a coating layer such as a sheath layer, an insulating layer and the like of an electric wire (inclusive of cables), and to an electric wire having a layer made from this composition, which is hardly whitened by injury or bending and which is superior in cold resistance and wear resistance.

### BACKGROUND OF THE INVENTION

It is a conventional practice to use polyvinyl chloride (hereinafter to be also referred to as PVC) when a coating material used for a coating layer (e.g., a sheath layer, an insulating layer and the like) of an electric wire is required to be flame-resistant. However, since PVC is suspected of producing dioxin and a toxic gas (e.g., hydrogen chloride gas and the like) upon incineration of an electric wire, the use of PVC has been restricted and a flame-resistant polyolefin obtained by blending a polyolefin resin imposing less environmental load and a flame retardant (e.g., metal hydroxide and the like) has been increasingly used.

As the above-mentioned metal hydroxide, aluminum hydroxide, magnesium hydroxide and the like are generally used. A coating material obtained by blending a polyolefin resin and a metal hydroxide and the like as a flame retardant is superior in flame-resistance, but when used particularly for a sheath layer, it is associated with the problems of whitening caused by abrasion and scratches produced by other objects, abrasion between electric wires (e.g., abrasion between electric wires due to dislocation of the electric wire in an electric wire braid made of plural electric wires) and the like (hereinafter to be also referred to as whitening by injury), and whitening at the bend part (hereinafter to be also referred to as whitening by bending).

The whitening by injury is caused by contact with a guide roll during the manufacture of an electric wire, and contact with other objects during wiring of an electric wire and the like. It occurs only on the surface of a sheath layer and does not affect greatly the properties of the electric wire. It still impairs product value because it damages the appearance of the electric wire. On the other hand, the whitening by bending occurs when an electric wire is bent during wiring and the like of the electric wire. It is considered to be caused by microcracks resulting from peeling off of the interface between metal hydroxide and a base resin. The microcracks may degrade the property of the sheath layer because they invade to reach the inner part of the sheath layer.

USP 5025042 proposes preventing the whitening of the above-mentioned sheath layer by adding, to polyolefin, magnesium hydroxide surface-treated with an amino silane coupling agent. The use of this magnesium hydroxide does not prevent whitening from occurring when the sheath layer is rubbed hard, or prevent whitening by injury from occurring when the base resin (polyolefin resin) of the sheath layer is relatively soft.

JP-A-10-237237 proposes adding acid anhydride-modified polyolefin and magnesium hydroxide surface-treated with fatty acid etc. to low-density polyethylene obtained by polymerization using a single-site catalyst, but this composition allows occurrence of whitening by bending. JP-A-7-157605 proposes a composition for building materials, which is obtained by adding ultra low-density polyethylene, ethylene-vinyl acetate copolymer saponifying product and magnesium hydroxide to a high-density polyethylene, but this composition allows occurrence of whitening by injury or bending. JP-B-7-66699 proposes adding acid anhydride-modified polyolefin and an inorganic hydrate (e.g., magnesium hydroxide and aluminum hydroxide) to polyolefin, but this composition allows occurrence of whitening by bending.

In view of the above-mentioned situation, the present invention aims at providing a flame-resistant resin composition that hardly suffers from whitening caused by injury or bending.

The present invention also aims at providing a flame-resistant resin composition that hardly suffers from whitening caused by injury or bending and that is superior in cold resistance and wear resistance, and an electric wire having a layer made from this composition.

According to the present invention, the above-mentioned objects can be accomplished by adding a specific surface-treated magnesium hydroxide, an acid anhydride-modified polyolefin resin and a rubber without halogen, to a base resin made from a polyolefin resin. The obtained flame-resistant resin composition suppresses whitening at a high level and is superior in cold resistance and wear resistance.

As the base resin, there have been conventionally used polyolefin resins such as high-pressure-produced low-density polyethylene (HPLD), linear low-density polyethylene (LLDPE), ethylene-vinyl acetate copolymer (EVA), ethylene-methyl acrylate copolymer (EMA), ethylene-ethyl acrylate copolymer (EEA) and the like. The high-pressure-produced low-density polyethylene (HPLD) shows a low tensile strength at break, which makes addition of a great amount of a flame retardant unfeasible, thus failing to provide sufficient flame resistance. While the tensile strength at break of the resin is decreased by adding the flame retardant, addition of a great amount of a flame retardant to an HPLD originally having a low tensile strength at break results in a failure to afford a tensile strength at break necessary for a coating material of an electric wire. A linear low-density polyethylene (LLDPE) has a relatively high melting point, and therefore, shows poor formability at a low temperature. To avoid this, the forming temperature needs to be elevated, which in turn results in a higher production cost and makes the use of aluminum hydroxide and naturally-occurring magnesium hydroxide, which are economically preferable flame retardants, unfeasible. To be specific, aluminum hydroxide has a low dehydrating temperature of about 200°C. The naturally-occurring magnesium hydroxide has a dehydrating temperature of not less than 300°C but contains much moisture adsorbed thereon. As a result, they both produce foams in a coating material during forming of the coating material at a high temperature. What is more, linear low-density polyethylene (LLDPE) shows poor acceptability of flame retardant, and therefore, a flame retardant cannot be added in a large amount. In addition, ethylene-vinyl acetate copolymer (EVA), ethylene-methyl acrylate copolymer (EMA), ethylene-ethyl acrylate copolymer (EEA) and the like are also associated with the problems as observed in the high-pressure-produced low-density polyethylene, and also the problems from the economical aspect, because they are expensive by themselves.

Therefore, the present invention also aims at providing a flame-resistant resin composition, which is free from inferior forming performance caused by the addition of a sufficient amount of a flame retardant, and which affords efficient forming at a low temperature, and superior tensile strength and elongation, as well as an electric wire having a layer of this composition.

According to the present invention, low-density polyethylene obtained by polymerization using a metallocene catalyst and high-pressure-produced low-density polyethylene is used as a base resin, and an inorganic metal compound (e.g., metal hydroxide and the like) is added. As a result, forming at a low temperature can be afforded without, for example, melt fracture or foaming, and particularly, mixing with aluminum hydroxide or naturally-occurring magnesium hydroxide does not cause foaming but affords efficient forming. The resulting formed product has suitable mechanical properties (e.g., high tensile strength, elongation) as a coating layer of an electric wire, such as a sheath layer, an insulating layer and the like.

### SUMMARY OF THE INVENTION

The present invention therefore provides a flame-resistant resin composition containing the following Components A-D:
Component A: a polyolefin resin,
Component B: an acid anhydride-modified polyolefin resin,
Component C: at least one member selected from the group consisting of magnesium hydroxide surface-treated with a fatty acid and magnesium hydroxide surface-treated with a coupling agent, and
Component D: a rubber without halogen.

Preferable modes are as follows.

In Component C, the coupling agent used is an amino silane coupling agent or an amino titanate coupling agent.

In Component A, the polyolefin resin is at least one member selected from the group consisting of polyethylene, ethylene-vinyl acetate copolymer, ethylene-methyl acrylate copolymer and ethylene-ethyl acrylate copolymer.

In Component A, the polyolefin resin is a low-density polyethylene obtained by polymerization using a metallocene catalyst.

In Component A, the polyolefin resin is a low-density polyethylene obtained by polymerization using a metallocene catalyst, and a high-pressure-produced low-density polyethylene.

The mixing ratio (A1/A2) of the low-density polyethylene (Al) obtained by polymerization using a metallocene catalyst and the high-pressure-produced low-density polyethylene (A2) is 99/1-70/30 in weight ratio.

The Component C contains at least magnesium hydroxide surface-treated with a fatty acid.

In Component D, the rubber without halogen is at least one member selected from the group consisting of polyisobutylene and an ethylene-vinyl acetate copolymer having a vinyl acetate content of at least 40 wt%.

In Component D, the rubber without halogen is polyisobutylene.

In Component B, the acid anhydride-modified polyolefin resin is at least one member selected from the group consisting of an ethylene/maleic anhydride bipolymer and an ethylene/maleic anhydride/acrylate terpolymer.

The total content of Component C per 100 parts by weight of Component A, Component B and Component D in total is 50-150 parts by weight.

The above-mentioned flame-resistant resin composition is a coating material for an electric wire.

The electric wire has a sheath layer and/or an insulating layer made from the above-mentioned flame-resistant resin composition.

Another aspect of the present invention is a flame-resistant resin composition containing the following Component A1, Component A2 and Component C1:
Component A1: a low-density polyethylene obtained by polymerization using a metallocene catalyst,
Component A2: high-pressure-produced low-density polyethylene, and
Component C1: an inorganic metal compound.

Preferable modes are as follows.

In Component C1, the inorganic metal compound is at least one member selected from the group consisting of aluminum hydroxide and naturally-occurring magnesium hydroxide.

The mixing ratio (A1/A2) of Component A1 and Component A2 is 99/1-70/30 in weight ratio.

The total content of Component C1 per 100 parts by weight of Component Al and Component A2 in total is 50-150 parts by weight.

The above-mentioned flame-resistant resin composition is a coating material for an electric wire.

The electric wire has a sheath layer and/or an insulating layer made from the above-mentioned flame-resistant resin composition.

### DETAILED DESCRIPTION OF THE INVENTION

The present invention is described in detail in the following. The flame-resistant resin composition of the present invention can be particularly preferably used as a coating material for an electric wire. As used herein, by the coating material for an electric wire is meant a material for covering an electric wire, including a sheath material and an insulating material, and the electric wire includes cables.

The flame-resistant resin composition of the present invention contains the following Components A-D as essential components:
Component A: a polyolefin resin,
Component B: an acid anhydride-modified polyolefin resin,
Component C: at least one member selected from the group consisting of magnesium hydroxide surface-treated with a fatty acid and magnesium hydroxide surface-treated with a coupling agent, and
Component D: a rubber without halogen.

Each component is explained in the following.

### Component A

In the present invention, the polyolefin resin, which is the Component A, is a base component that is responsible for the basic properties mainly required of a coating material for an electric wire, such as electric properties (e.g., insulating property, dielectric constant and the like), mechanical properties (e.g., flexibility, elongation, tensile strength and the like), chemical properties (e.g., chemical resistance and the like), processability, and the like. It is different from Component B to be mentioned later, and is not modified with acid anhydride. Examples of the polyolefin resin generally include polyethylene resins and polypropylene resins. Examples of the polyethylene resin include homopolymer of ethylene, copolymer of ethylene and other vinyl compound, and a mixture of these and the like. Examples of preferable copolymer of ethylene and other vinyl compound include copolymer of ethylene and other α-olefin, copolymer of ethylene and vinyl acetate, methyl acrylate or ethyl acrylate; and examples of α-olefin of the copolymer of ethylene and other α-olefin include propylene, butene-1, pentene-1, 4-methyl-1-pentene, hexene-1, octene-1 and the like. Examples of the polypropylene resin include homopolymer of propylene, copolymer of propylene and other vinyl compound, a mixture of these and the like; and examples of preferable copolymer of propylene and other vinyl compound include copolymer of propylene and other α-olefin, and examples of the α-olefin include butene-1, pentene-1, 4-methyl-1-pentene, hexene-1, octene-1 and the like.

Of these, preferred are polyethylene (PE), ethylene-vinyl acetate copolymer (EVA), ethylene-methyl acrylate copolymer (EMA) and ethylene-ethyl acrylate copolymer (EEA), from the aspects of mechanical property and thermal property, and at least one member selected therefrom is used. The polyethylene is preferably low-density polyethylene (LDPE), particularly preferably one having a density of 0.800-0.930 g/cm³, in view of the acceptability of magnesium hydroxide. As the ethylene-vinyl acetate copolymer, preferred is one having a vinyl acetate content of not less than 5 wt% and less than 40 wt%; the ethylene-methyl acrylate copolymer is preferably one having a methyl acrylate content of 5-45 wt%; and the ethylene-ethyl acrylate copolymer is preferably one having an ethyl acrylate content of 5-45 wt%. The above-mentioned density is measured according to the method defined in JIS K 6922.

Of the low-density polyethylene (LDPE), particularly low-density polyethylene obtained by polymerization using a metallocene catalyst (hereinafter to be also referred to as metallocene polyethylene) and high-pressure-produced low-density polyethylene are preferable, and as the Component A, metallocene polyethylene and a combination of metallocene polyethylene and high-pressure-produced low-density polyethylene are particularly preferable.

The metallocene is a general name of bis(cyclopentadienyl) metal compounds, which are non-electrolyte complexes having a sandwich structure, wherein a metal atom is sandwiched between two cyclopentadienyl rings facing each other and having a regular pentagon structure. The representative examples include a compound of the following formula 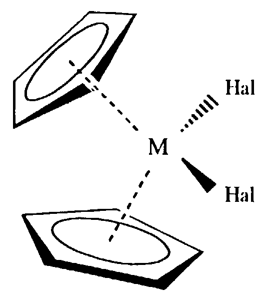 wherein M is a metal, such as Zr, Ti, Vi, Cr, Fe, Co, Ni, Ru, Pd and the like, with preference given to Zr capable of homogeneous polymerization, and Hal is halogen, with preference given to C1 capable of homogeneous polymerization, a compound of the following formula 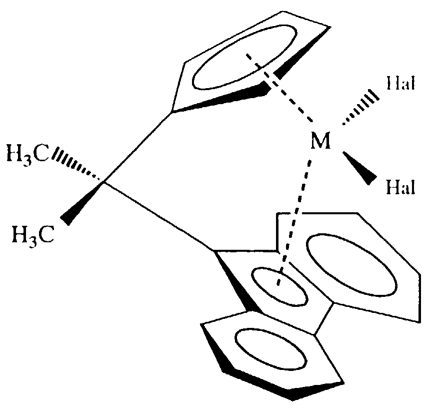 wherein M and Hal are as defined above, these compounds wherein the 5-membered ring is substituted by an alkyl group, such as (CH₃)₂CH- etc., and the like.

For example, JP-A-10-106363 discloses the use of metallocene polyethylene as an electric wire material. In the present invention, metallocene polyethylene used in known publications can be used.

Examples of metallocene polyethylene include homopolymer of ethylene or a polymer containing ethylene unit and α-olefin unit in not more than several percents by mole. Examples of u-olefin include propylene, butene-1, pentene-1, 4-methyl-1-pentene, hexene-1, octene-1 and the like. Preferably, metallocene polyethylene has a tensile strength at break of 10-50 MPa and a melting point of 50-130°C. In view of the acceptability of a flame retardant, it preferably has a density of 0.800-0.930 g/cm³, particularly preferably 0.880-0.910 g/cm³. In view of the processability, it preferably has a melt flow rate (MFR) at 190°C of 0.1-60 g/10 min. The tensile strength at break is measured according to the method defined in JIS K 6922-2, Appendix; the melting point is a DSC peak temperature measured according to the method defined in JIS K 7121; the density is measured according to the method defined in JIS K 6922; and the melt flow rate (MFR) is measured according to the method defined in JIS K 6922-2, Appendix.

Metallocene polyethylene is characterized by the generally constant molecular weight, branched structure and crystal structure, as well as the generally high strength and generally low crystallinity. This is because the stereostructure of metallocene leads to stereoregular polymerization due to the contact between metal and monomer that constantly occurs in the same direction, and because the polymerization proceeds in a solvent (homogeneous system), as the metallocene catalyst is soluble in a solvent.

By the use of metallocene polyethylene as the Component A, a flame-resistant resin composition having superior tensile strength and elongation can be obtained.

The high-pressure-produced low-density polyethylene (HPLD) is obtained by radical polymerization under a high pressure of not less than 1000 atm. The low density thereof is achieved by the presence of a branched long chain besides a branched short chain (e.g., ethyl group and the like). This high-pressure-produced low-density polyethylene imparts a suitable melt tension to the flame-resistant resin composition of the present invention. The high-pressure-produced low-density polyethylene preferably has a density of 0.910-0.930 g/cm³. Further, it preferably has a melt flow rate (MFR) at 190°C of 0.1-50 g/10 min, particularly preferably 0.1-3.0 g/10 min, from the aspect of melt tension. These density and melt flow rate (MFR) are measured according to the aforementioned method.

By the use of metallocene polyethylene and high-pressure-produced low-density polyethylene as Component A, a flame retardant (Component C) can be added in a large amount and a flame-resistant resin composition showing superior formability at a low temperature can be obtained. Consequently, a post-forming coating layer (that covers an electric wire) shows superior mechanical properties (e.g., tensile strength and elongation), and uniform properties without melt fracture or foaming. Particularly, the absence of melt fracture and foaming eliminates stress concentration, thereby affording a superior tensile strength at break.

The mixing ratio (A1/A2) of metallocene polyethylene (Component A1) and the high-pressure-produced low-density polyethylene (Component A2) is preferably 99/1-70/30, more preferably 95/5-85/15, in weight ratio. When Component A1 exceeds this range, the flame-resistant resin composition of the present invention tends to show inferior forming performance due to low melt tension and low shear viscosity. When it falls below this range, a formed product tends to show degraded mechanical properties such as tensile strength, elongation and the like.

### Component B

The acid anhydride-modified polyolefin resin, which is the Component B, is a polyolefin resin containing an acid anhydride having at least one vinyl group in a molecule as a copolymerizable component. It mainly prevents peeling off of the interface between a polyolefin resin (Component A), and magnesium hydroxide surface-treated with a fatty acid and/or magnesium hydroxide surface-treated with a coupling agent (these are also collectively referred to as surface-treated magnesium hydroxide), which is the Component C mentioned later, wherein the peeling off causes whitening. This acid anhydride-modified polyolefin resin is exemplified by α-olefin/acid anhydride bipolymer, α-olefin/acid anhydride/acrylic compound or vinyl ester compound terpolymer and the like, and at least one member selected therefrom is used.

Preferable examples of the above-mentioned acid anhydride include maleic anhydride, itaconic anhydride, citraconic anhydride, glutaconic anhydride and the like, with particular preference given to maleic anhydride. This acid anhydride forms a hydrogen bond between the surface-treated magnesium hydroxide (Component C) and the polyolefin resin (Component A), to provide strong adhesion between the surface-treated magnesium hydroxide and the polyolefin resin. Accordingly, the peeling off of the interface between the surface-treated magnesium hydroxide and the polyolefin resin in the flame-resistant resin composition can be prevented.

The above-mentioned α-olefin is preferably exemplified by ethylene, propylene, butene-1 and the like, with particular preference given to ethylene. The α-olefin imparts affinity for a polyolefin resin (Component A) to acid anhydride-modified polyolefin resin (Component B). Therefore, ethylene is particularly preferably used as the α-olefin to achieve superior affinity for polyethylene, ethylene-vinyl acetate copolymer, ethylene-methyl acrylate copolymer and ethylene-ethyl acrylate copolymer, which are preferable examples of polyolefin resin (Component A).

Preferable examples of the above-mentioned acrylic compound include acrylic acid, methacrylic acid, methyl acrylate, methyl methacrylate, ethyl acrylate, ethyl methacrylate and the like, with more preference given to acrylate, and particular preference given to ethyl acrylate. As the above-mentioned vinyl ester compound, vinyl acetate and the like are preferable.

Examples of preferable acid anhydride-modified polyolefin resin include an ethylene/maleic anhydride bipolymer and an ethylene/maleic anhydride/acrylate terpolymer, which is particularly preferably an ethylene/maleic anhydride/ethyl acrylate terpolymer.

The acid anhydride-modified polyolefin resin has an acid anhydride content of preferably 0.05-10 wt%, more preferably 0.1-5.0 wt%, in the case of α-olefin/acid anhydride bipolymer, and preferably 0.05-10 wt%, more preferably 0.1-5.0 wt%, in the case of an α-olefin/acid anhydride/acrylic compound or a vinyl ester compound terpolymer. Although subject to change according to the mixing ratio of polyolefin resin (Component A) and surface-treated magnesium hydroxide (Component C) in the flame-resistant resin composition, when the acid anhydride content is lower than the above-mentioned range, a sufficient whitening preventive effect cannot be obtained easily, and when it is higher, the flame-resistant resin composition of the present invention tends to show a lower tensile strength.

According to the present invention, an α-olefin/acid anhydride/acrylic compound and a vinyl ester compound terpolymer show a particularly superior whitening preventive effect. This is attributable to the fact that an acrylic compound and a vinyl ester compound lower the crystallinity of the copolymer, which in turn reduces the occurrence of the peeling off of the interface between the surface-treated magnesium hydroxide (Component C) and the polyolefin resin (Component A) due to the residual stress produced by the shrinkage upon forming. In addition, the adhesion of the copolymer can be improved, and the adhesion between the surface-treated magnesium hydroxide and the polyolefin resin can be improved, thereby enhancing the whitening preventive effect. The acrylic compound or vinyl ester compound content of the above-mentioned terpolymer is preferably 0.1-40 wt%, more preferably 2-30 wt%.

In the flame-resistant resin composition of the present invention, the mixing ratio (weight ratio) of Component B relative to the total of Component A and Component D (to be mentioned later) [(Component A + Component D) : Component B] is preferably 99:1 - 50:50, more preferably 97:3 - 65:35. When the content of Component B is greater than this range, the mechanical strength (e.g., tensile strength and the like) and heat resistance of the inventive flame-resistant resin composition tend to decrease, and when it is lower, the effect by the addition of Component B cannot be provided easily.

By the addition of an acid anhydride-modified polyolefin resin (Component B) in this way, the whitening preventive effect of the flame-resistant resin composition can be achieved, as well as the wear resistance and cold resistance of this composition can be improved to a greater degree. This is because a strong adhesion between the surface-treated magnesium hydroxide (Component C) and the polyolefin resin (Component A) can be established.

### Component C

In the present invention, magnesium hydroxide surface-treated with a fatty acid and/or magnesium hydroxide surface-treated with a coupling agent (these are also collectively referred to as surface-treated magnesium hydroxide) are/is used as a flame retardant. The magnesium hydroxide is surface-treated with a fatty acid and/or a coupling agent to improve adhesion of magnesium hydroxide to the polyolefin resin (Component A) in the flame-resistant resin composition.

The addition of the above-mentioned surface-treated magnesium hydroxide alone without the above-mentioned acid anhydride-modified polyolefin resin (Component B) does not provide a sufficient preventive effect on whitening. The addition of the above-mentioned acid anhydride-modified polyolefin resin (Component B) alone without the above-mentioned surface-treated magnesium hydroxide does not provide a sufficient preventive effect on whitening, either. In other words, the addition of both the Component B and Component C is necessary to increase adhesion between the surface-treated magnesium hydroxide and the polyolefin resin (Component A) in the flame-resistant resin composition to the degree sufficient to prevent whitening.

At least magnesium hydroxide surface-treated with a fatty acid is preferably used as the Component C because it can improve elongation, wear resistance and the like of the flame-resistant resin composition.

Magnesium hydroxide has an average particle size of preferably 0.1-20 µm, more preferably 0.5-5 µm.

As the above-mentioned fatty acid, a fatty acid having 15 to 20 carbon atoms is preferable, which is exemplified by palmitic acid, stearic acid, oleic acid, linoeic acid, linolenic acid and the like.

Preferable examples of the above-mentioned coupling agent include amino silane coupling agent, amino titanate coupling agent and the like.

Examples of the amino silane coupling agent include γ-aminopropyltriethoxysilane, N-β-(aminoethyl)-γ-aminopropyl-trimethoxysilane, γ-ureidopropyltriethoxysilane, γ-anilinopropyl-trimethoxysilane, aminobenzenetriethoxysilane, N-4,4'-methylene-bisbenzeneamino-cyclohexanolethyltrimethoxysilane, N-4,4'-methylenebisbenzeneamino-2-hydroxypropyloxypropyltrimethoxysilane, N-aminobenzenemethylene-p-phenylene-γ-ureidopropyltrimethoxysilane, N-4,4'-oxybisbenzeneamino-cyclohexanolethyltrimethoxysilane, N-4,4'-oxybisbenzeneamino-2-hydroxypropyloxypropyltrimethoxysilane, N-aminobenzeneoxy-p-phenylene-γ-ureidopropyltrimethoxysilane, N-4,4'-sulfonylbenzeneamino-cyclohexanolethyltrimethoxysilane, N-4,4'-sulfonylbenzeneamino-2-hydroxypropyloxypropyltrimethoxysilane, N-aminobenzenesulfonyl-p-phenylene-γ-ureidopropyltrimethoxysilane, N-p-phenylenediamino-cyclohexanolethyltrimethoxysilane, N-p-phenylenediamino-2-hydroxypropyloxypropyltrimethoxysilane, N-p-phenylenediamino-γ-ureidopropyltrimethoxysilane and the like, which may be used alone or in combination.

Examples of the amino titanate coupling agent include γ-aminopropyltriethoxytitanium, N-(β-(aminoethyl)-γ-aminopropyl-trimethoxytitanium, γ-ureidopropyltriethoxytitanium, γ-anilinopropyltrimethoxytitanium, aminobenzenetriethoxytitanium, N-4,4'-methylenebisbenzeneamino-cyclohexanolethyltrimethoxytitanium, N-4,4'-methylenebisbenzeneamino-2-hydroxypropyloxypropyl-trimethoxytitanium, N-aminobenzenemethylene-p-phenylene-γ-ureidopropyltrimethoxytitanium, N-4,4'-oxybisbenzeneamino-cyclohexanolethyltrimethoxytitanium, N-4,4'-oxybisbenzeneamino-2-hydroxypropyloxypropyltrimethoxytitanium, N-aminobenzeneoxy-p-phenylene-γ-ureidopropyltrimethoxytitanium, N-4,4'-sulfonyl-benzeneamino-cyclohexanolethyltrimethoxytitanium, N-4,4'-sulfonylbenzeneamino-2-hydroxypropyloxypropyltrimethoxytitanium, N-aminobenzenesulfonyl-p-phenylene-γ-ureidopropyltrimethoxy-titanium, N-p-phenylenediamino-cyclohexanolethyltrimethoxytitanium, N-p-phenylenediamino-2-hydroxypropyloxypropyltrimethoxytitanium, N-p-phenylenediamino-γ-ureidopropyltrimethoxytitanium and the like, which may be used alone or in combination.

The method of surface treatment of magnesium hydroxide with a fatty acid and/or a coupling agent is not particularly limited. A general method, such as a slurry method wherein magnesium hydroxide is added to an alcohol solution of a fatty acid and/or a coupling agent and dried after treatment, a dry method wherein a fatty acid and/or a coupling agent are/is directly sprayed on a magnesium hydroxide powder, and the like, is employed. The amount of the coupling agent used varies depending on its kind. It is preferably 0.002-5.0 parts by weight, more preferably 0.1-3.0 parts by weight, per 100 parts by weight of magnesium hydroxide. The amount of the fatty acid used varies depending on its kind. It is preferably 0.001-3.0 parts by weight, more preferably 0.01-1.0 parts by weight, per 100 parts by weight of magnesium hydroxide.

The content of the Component C (when magnesium hydroxide surface-treated with a fatty acid and magnesium hydroxide surface-treated with a coupling agent are used in combination, the total content thereof) in the flame-resistant resin composition of the present invention is preferably 50-150 parts by weight, more preferably 70-130 parts by weight, per 100 parts by weight of Component A, Component B and Component D to be mentioned later in total. When the amount of Component C is greater than this range, the flexibility, elongation, resistance to whitening by injury, resistance to whitening by bending and the like of the flame-resistant resin composition tend to decrease. When it is smaller, the flame-resistant resin composition tends to show lower flame-resistance. When magnesium hydroxide (CA) surface-treated with a fatty acid and magnesium hydroxide (CB) surface-treated with a coupling agent are used in combination, the mixing ratio (CA/CB) thereof is preferably 3/1-1/3, more preferably 2/1-1/2.

### Component D

In the present invention, a rubber without halogen, which is Component D, is added to further relieve the shock applied to the adhesion interface between the surface-treated magnesium hydroxide (Component C) and the polyolefin resin (Component A), and to prevent whitening by injury or bending. The rubber without halogen means a rubber that does not contain halogen, but has a tensile modulus of not more than 50 MPa. Examples thereof include polyisobutylene, butyl rubber, ethylene propylene rubber (EPM, EPDM), silicone rubber, ethylene-vinyl acetate copolymer (EVA) containing 40-60 wt% of vinyl acetate, dynamic crosslinked product of ethylene/propylene copolymer and polypropylene (for example, Santoprene (trademark, AES Japan)), homopolymer of 1-butene, which has a density of not more than 0.91 g/cm³ (for example, TAFMER A (trademark, MITSUI CHEMICALS, INC.) and the like.

The polyolefin resin (Component A) and acid anhydride-modified polyolefin resin (Component B) have a tensile modulus of more than 50 MPa, and they do not show rubber like elasticity as does Component D. For example, an ethylene/propylene copolymer having a tensile modulus of not more than 50 MPa is used as Component D and an ethylene/propylene copolymer having a tensile modulus of more than 50 MPa is used as Component A. The tensile modulus here is measured according to the method defined in JIS K 7113.

In the present invention, at least one member selected from the group consisting of polyisobutylene and ethylene-vinyl acetate copolymer having a vinyl acetate content of at least 40%, preferably 40-60 wt% is preferably used as the rubber without halogen in view of the desired wear resistance. When the vinyl acetate content is less than 40 wt%, the wear resistance tends to be improved only to a smaller degree.

In the flame-resistant resin composition of the present invention, the mixing ratio (weight ratio) of Component D relative to the total of Component A and Component B [(Component A + Component B) : Component D] is preferably 99.5:0.5 - 90:10, more preferably 99:1 - 95:5. When the content of Component D is greater than this range, the mechanical strength (e.g., tensile strength and the like) and heat resistance of the inventive flame-resistant resin composition tend to decrease, and when it is lower, the effect by the addition of Component D cannot be provided easily.

The flame-resistant resin composition of the present invention may contain an appropriate amount of a known additive without halogen, which is used in the pertinent field. Examples of the additive include a stabilizing agent, an antioxidant, a filler, a colorant, carbon black, a crosslinking agent, a lubricant, a processability improver, an antistatic agent and the like.

The flame-resistant resin composition of the present invention can be produced by mixing the above-mentioned Components A-D and the above-mentioned various additives as desired, kneading the mixture in a known mixer such as a Banbury mixer, a press kneader, a twin extruder and the like, and forming the admixture by injection forming, extrusion forming, rotational forming, press forming and the like into a desired shape.

The flame-resistant resin composition of the present invention prevents whitening by injury and whitening by bending at a high level, and shows superior cold resistance and superior wear resistance. Therefore, it is particularly preferable as a coating material for an electric wire and can be used for a coating layer of an electric wire such as a sheath layer and an insulating layer. In view of the prevention of whitening, it is particularly preferably used for a sheath layer. Specifically, it is preferably used for an insulating sheath of a low pressure electric wire, a sheath of an optical fiber, an electric sheath and the like.

The flame-resistant resin composition in the other aspect of the present invention contains the following Component A1, Component A2 and Component C1 as essential components.
Component A1: a low-density polyethylene obtained by polymerization using a metallocene catalyst,
Component A2: high-pressure-produced low-density polyethylene, and
Component C1: an inorganic metal compound.

Each component is explained in the following.

### Component A1

The metallocene of the low-density polyethylene obtained by polymerization using a metallocene catalyst (hereinafter to be also referred to as metallocene polyethylene) is a general name of bis(cyclopentadienyl) metal compounds, which are non-electrolyte complexes having a sandwich structure, wherein a metal atom is sandwiched between two cyclopentadienyl rings facing each other and having a regular pentagon structure. The representative examples include a compound of the following formula 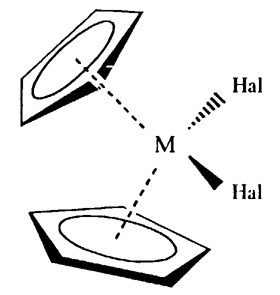 wherein M is a metal, such as Zr, Ti, Vi, Cr, Fe, Co, Ni, Ru, Pd and the like, with preference given to Zr capable of homogeneous polymerization, and Hal is halogen, with preference given to Cl capable of homogeneous polymerization, a compound of the following formula 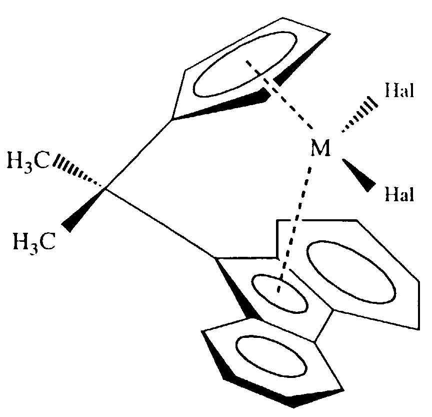 wherein M and Hal are as mentioned above, these compounds wherein the 5-membered ring is substituted by an alkyl group, such as (CH₃)₂CH- etc., and the like.

Metallocene polyethylene is characterized by the generally constant molecular weight, branched structure and crystal structure, as well as the generally high strength and generally low crystallinity. This is because the stereostructure of metallocene leads to stereoregular polymerization due to the contact between metal and monomer that constantly occurs in the same direction and because the polymerization proceeds in a solvent (homogeneous system), as the metallocene catalyst is soluble in a solvent.

By the use of metallocene polyethylene (Component A1) superior in the homogeneiety of the molecular weight, the branched structure, the crystal structure and the like, and having high strength and low crystallinity, and high-pressure-produced low-density polyethylene (Component A2) to be mentioned later as a base resin a flame retardant (Component C1) can be added in a large amount and a flame-resistant resin composition showing superior formability at a low temperature can be obtained. Consequently, a post-forming coating layer (that covers an electric wire) shows superior mechanical properties (e.g., tensile strength and elongation), and uniform properties without melt fracture or foaming. Particularly, the absence of melt fracture and foaming eliminates stress concentration, thereby affording a superior tensile strength at break.

Examples of metallocene polyethylene (Component A1) include homopolymer of ethylene or a polymer containing ethylene unit and α-olefin unit in not more than several percents by mole. Examples of α-olefin include propylene, butene-1, pentene-1, 4-methyl-1-pentene, hexene-1, octene-1 and the like. Preferably, metallocene polyethylene has a tensile strength at break of 10-50 MPa and a melting point of 50-130°C. In view of the acceptability of a flame retardant (inorganic metal compound), it has a density of preferably 0.800-0.930 g/cm³, particularly preferably 0.880-0.910 g/cm³. In view of the processability, it preferably has a melt flow rate (MFR) at 190°C of 0.1-60 g/10 min. The tensile strength at break is measured according to the method defined in JIS K 6922-2, Appendix; the melting point is a DSC peak temperature measured according to the method defined in JIS K 7121; the density is measured according to the method defined in JIS K 6922; and the melt flow rate (MFR) is measured according to the method defined in JIS K 6922-2, Appendix.

### Component A2

The high-pressure-produced low-density polyethylene (HPLD, Component A2) is produced by radical polymerization under a high pressure of not less than 1000 atm. The low density thereof is achieved by the presence of a branched long chain besides a branched short chain (e.g., ethyl group and the like). This high-pressure-produced low-density polyethylene imparts a suitable melt tension to the flame-resistant resin composition of the present invention. When the base resin component consists of metallocene polyethylene (Component A1) without using high-pressure-produced low-density polyethylene (Component A2), the melt tension becomes too low and melt fracture appeared.

The high-pressure-produced low-density polyethylene preferably has a density of 0.910-0.930 g/cm³. Further, it preferably has a melt flow rate (MFR) at 190°C of 0.1-50 g/10 min, particularly preferably 0.1-3.0 g/10 min, from the aspect of melt tension. These density and melt flow rate (MFR) are measured according to the aforementioned method.

The mixing ratio (A1/A2) of Component A1 and Component A2 is preferably 99/1-70/30, more preferably 95/5-85/15, in weight ratio. When Component A1 (metallocene polyethylene) exceeds this range, the flame-resistant resin composition of the present invention tends to show inferior formability due to low melt tension and low shear viscosity. When it falls below this range, a formed product tends to show degraded mechanical properties such as tensile strength, elongation and the like.

### Component C1

The inorganic metal compound, which is Component C1, may be, for example, metal hydroxide such as aluminum hydroxide, magnesium hydroxide (synthesized or naturally-occurring), zirconium hydroxide, calcium hydroxide, barium hydroxide and the like; metal carbonate such as basic magnesium carbonate, dolomite and the like; metal hydroxide hydride such as borax and the like; complex of metal hydroxide hydride and metal carbonate, such as hydrotalcite and the like; and the like. These compounds may be used alone or in combination. Particularly, metal hydroxide is preferable because it is superior in the flame-resistance imparting effect and economically advantageous. Specifically, aluminum hydroxide and magnesium hydroxide are preferable. While aluminum hydroxide and naturally-occurring magnesium hydroxide tend to induce foaming of resin in a high temperature forming environment, the inventive flame-resistant resin composition affords superior formability without the above-mentioned inconvenience even when aluminum hydroxide and/or naturally-occurring magnesium hydroxide are/is used, because it shows superior formability at a low temperature.

The inorganic metal compound has an average particle size of preferably 0.1-20 µm, more preferably 0.5-5 µm. The total content of Component C1 per 100 parts by weight of Component A1 and Component A2 in total is 50-150 parts by weight, more preferably 70-120 parts by weight. When the content of Component C1 is greater than this range, the mechanical strength (e.g., tensile strength, elongation) of the inventive flame-resistant resin composition tends to decrease, and when it is lower, sufficient flame-resistance cannot be provided easily.

The flame-resistant resin composition of the present invention may contain, besides the above-mentioned Component A1, Component A2 and Component C1, an appropriate amount of a known additive without halogen, which is used in the pertinent field. Examples of the additive include a stabilizing agent, an antioxidant, a filler, a colorant, carbon black, a crosslinking agent, a lubricant, a processability improver, an antistatic agent and the like.

The flame-resistant resin composition of the present invention can be produced by mixing the above-mentioned Component A1, Component A2 and Component C1 and the above-mentioned various additives as desired, kneading the mixture in a known mixer such as a Banbury mixer, a press kneader, a twin extruder and the like, and forming the admixture by injection forming, extrusion forming, rotational forming, press forming and the like to cover an electric wire. During the forming, the inventive flame-resistant resin composition shows superior formability in a low temperature range of not more than 180°C without a forming failure. The coating layer has a thickness that varies depending on the specification (kind, use) of the electric wire and is not subject to any particular limitation. The thickness is generally determined in the range of 0.1 - 10 mm according to the specification (kind, use) of the electric wire.

The electric wire can be produced by, for example, continuous extrusion of a flame-resistant resin composition while feeding a conductor for an electric wire into an extruder to form a coating layer (sheath layer and/or insulating layer) of this composition on the circumference of the conductor. The extrusion temperature is set to 140-180°C and the take-up speed of the electric wire is set to 5-200 m/min during the production step of the electric wire by extrusion forming.

The flame-resistant resin composition of the present invention is particularly preferable as a coating material for an electric wire, and can be used for a coating layer of an electric wire such as a sheath layer and an insulating layer. Particularly, it is preferable as an insulating sheath for a low pressure electric wire, a sheath for an optical fiber, an electric sheath and the like.

The present invention is explained in more detail in the following by referring to Examples and Comparative Examples. The present invention is not limited by these Examples.

### Examples 1-19, Comparative Examples 1-4

Each component shown in Tables 1-4 was cast in a Banbury mixer (Toyo Seisaku-Sho, Ltd.) at once and kneaded for 20 minutes. The mixture was press formed at 160°C for 10 minutes to prepare test sheets and test pieces for respective Examples and Comparative Examples. The test sheets and test pieces were subjected to the following evaluation tests.

The content of each component is expressed in parts by weight. The MFR (melt flow rate, at 190°C) of LDPE, EEA, metallocene polyethylene, high-pressure-produced low-density polyethylene and ethylene/maleic anhydride/ethyl acrylate terpolymer was measured according to JIS K 6922-2, Appendix. The density of LDPE, metallocene polyethylene and high-pressure-produced low-density polyethylene was measured according to JIS K 6922. The intrinsic viscosity of polyisobutylene was measured using diisobutylene as a solvent.

### [Evaluation test] tensile property

A test sheet having a thickness of 1 mm was measured for tensile strength (MPa) and elongation (%) according to JIS K 7113.

### cold resistance

A test sheet having a thickness of 2 mm was subjected to the measurement according to JIS C 3005. The test temperature was -50°C, and the evaluation followed the three criteria of no cracks (O), cracks (Δ) and breakage (X).

### wear resistance

A test sheet having a thickness of 1 mm was subjected to the measurement of weight loss after 1000 rotations of abrasion test according to JIS K 6902. The abrading wheel was H-18 manufactured by TABER and the load was 4.9 N.

### Resistance to whitening by bending

A test piece having a thickness of 1 mm, a width of 20 mm and a length of 100 mm was prepared. The test piece was bent twice at 180 degrees and the degree of whitening was visually observed. The evaluation followed the three criteria of no whitening (○), partial whitening (Δ) and entire whitening (×).

### Resistance to whitening by injury

The degree of whitening at the abrasion part of the sample after the abrasion test was evaluated according to three criteria of no whitening (O), partial whitening (Δ) and entire whitening (×).

The results of these tests are shown in Tables 1-4.

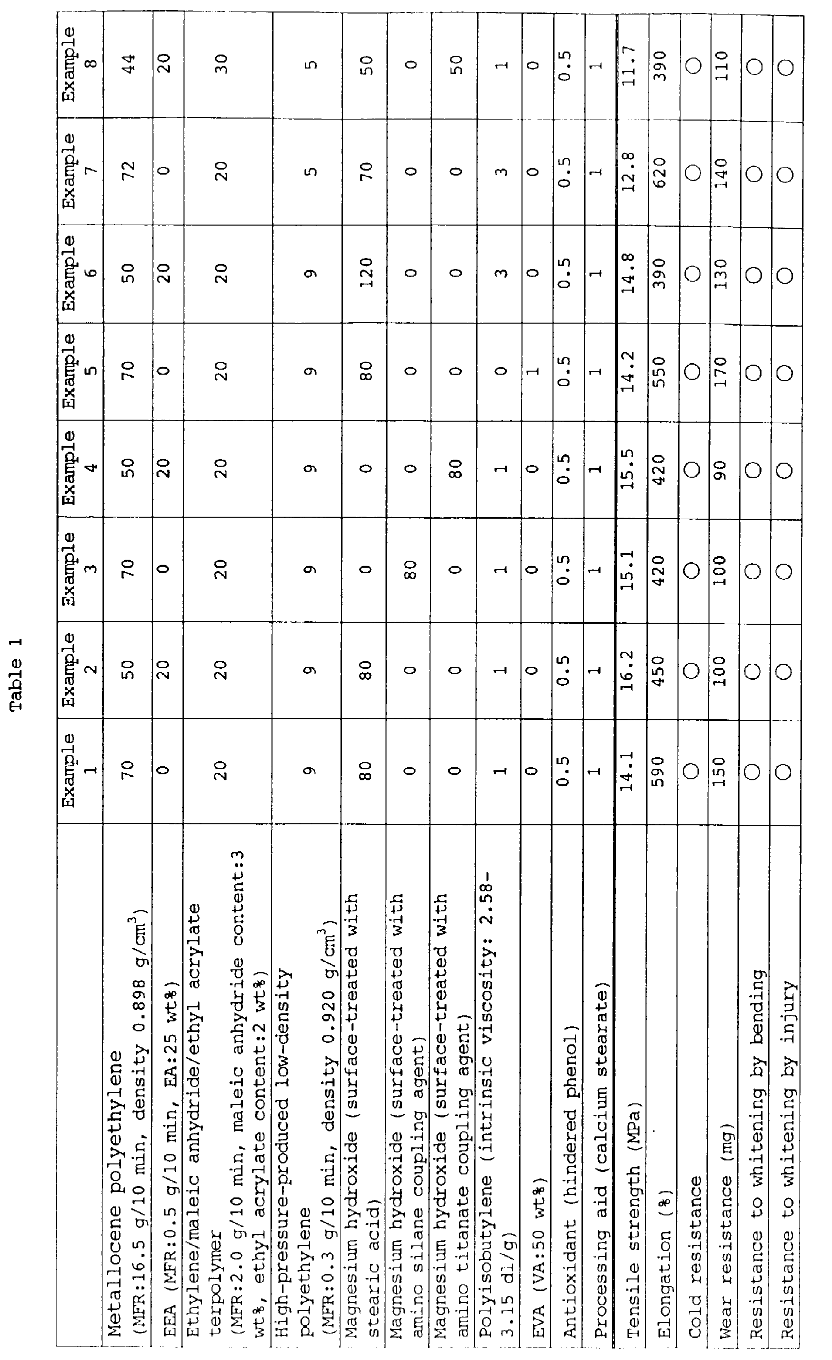

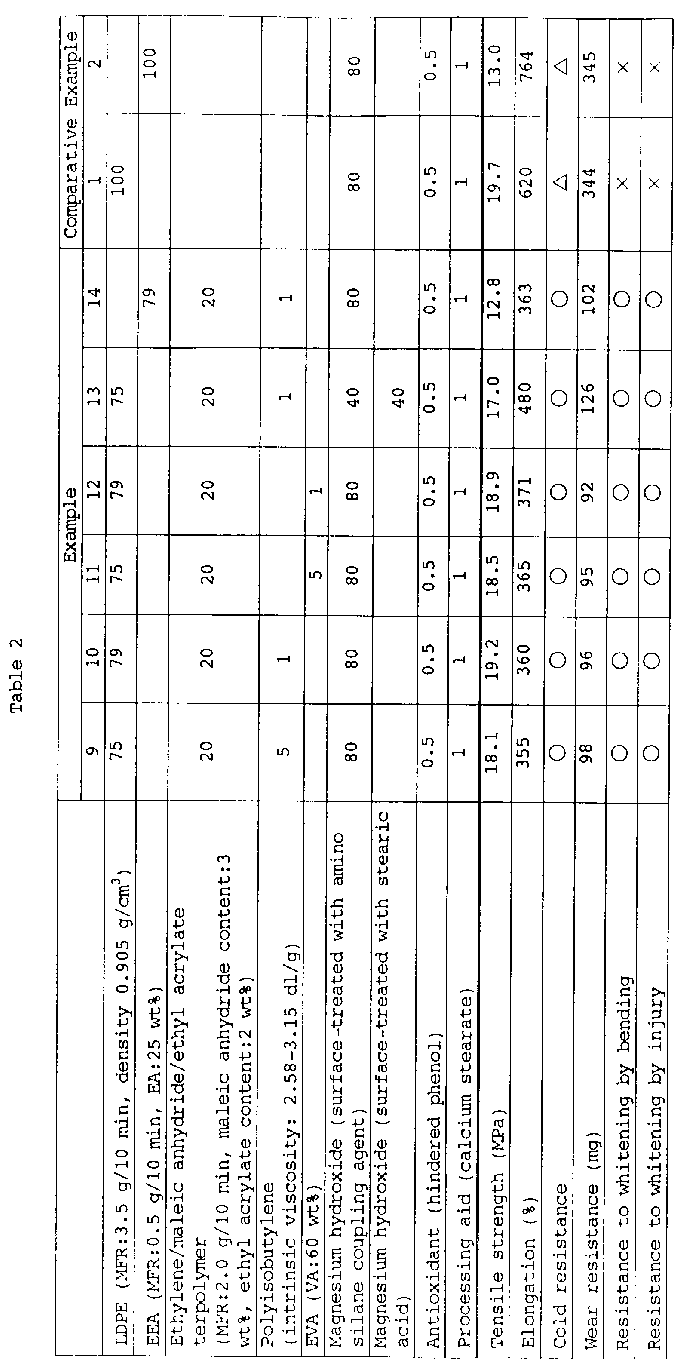

**Table 3**

| | Example | | Comparative Example | |
|---|---|---|---|---|
| | 15 | 16 | 3 | 4 |
| Metallocene polyethylene (MFR:3.5 g/10 min, density 0.905 g/cm³) | 75 | 75 | 100 | |
| Metallocene polyethylene (MFR:4.0 g/10 min, density 0.918 g/cm³) | | | | 100 |
| Ethylene/maleic anhydride/ethyl acrylate terpolymer (MFR:2 g/10 min, ethyl acrylate content:2 wt%, maleic anhydride content:3 wt%) | 20 | 20 | | |
| Polyisobutylene (intrinsic viscosity:2.58-3.15 dl/g) | 5 | | | |
| EVA (VA:60 wt%) | | 5 | | |
| Magnesium hydroxide (surface-treated with amino silane coupling agent) | 80 | 80 | 80 | 80 |
| Antioxidant (hindered phenol) | 0.5 | 0.5 | 0.5 | 0.5 |
| Processing aid (calcium stearate) | 1 | 1 | 1 | 1 |
| Tensile strength (MPa) | 18.1 | 18.5 | 19.7 | 17.4 |
| Elongation (%) | 355 | 365 | 620 | 642 |
| Wear resistance (mg) | 98 | 95 | 344 | 325 |

**Table 4**

| | Example | | |
|---|---|---|---|
| | 17 | 18 | 19 |
| LDPE (MFR:3.5 g/10 min, density 0.905 g/cm³) | 79 | 79 | |
| EEA (MFR:0.5 g/10 min, EA:15 wt%) | | | 79 |
| Ethylene/maleic anhydride/ethyl acrylate terpolymer (MFR:2 g/10 min, ethyl acrylate content:2 wt%, maleic anhydride content:3 wt%) | 20 | 20 | 20 |
| Polyisobutylene (intrinsic viscosity:2.58-3.15 dl/g) | 1 | 1 | 1 |
| Magnesium hydroxide (surface-treated with stearic acid) | 80 | | |
| Magnesium hydroxide (surface-treated with oleic acid) | | 80 | 80 |
| Antioxidant (hindered phenol) | 0.5 | 0.5 | 0.5 |
| Processing aid (calcium stearate) | 1 | 1 | 1 |
| Tensile strength (MPa) | 11.4 | 13.4 | 12.5 |
| Elongation (%) | 500 | 380 | 382 |
| Wear resistance (mg) | 125 | 98 | 105 |

From Tables 1-4, it is known that the flame-resistant resin compositions obtained in Examples 1-19 were free of whitening by bending and whitening by injury, showed superior cold resistance and wear resistance, and fine tensile strength and elongation. In contrast, the flame-resistant resin compositions obtained in Comparative Examples 1 and 2 showed whitening by bending and whitening by injury, and were inferior in cold resistance, wear resistance and elongation. The flame-resistant resin compositions obtained in Comparative Examples 3 and 4 were inferior in wear resistance and elongation.

### Examples 20-23, Comparative Examples 5-9

Each component shown in Table 5 was cast in a Banbury mixer (Toyo Seisaku-Sho, Ltd.) at once and kneaded for 20 minutes. The mixture was press formed at 160°C for 10 minutes to prepare test sheets (thickness 1 mm). The test sheets were subjected to the measurement of tensile properties (tensile strength (MPa) and elongation (%)) according to JIS K 7113. The tensile strength exceeding 10 MPa was evaluated to be an acceptance quality. The elongation exceeding 350% was evaluated to be an acceptance quality. Using a soft copper-stranded wire having a sectional area of 2.0 mm² as a conductor, each component shown in Table 5 was extruded by a φ30 mm extruder at 50 rpm to give a coated electric wire of each Example and Comparative Example. The take-up speed, at which continuous extrusion was possible, was measured and the appearance of the electric wire was evaluated. The appearance of the electric wire (presence of melt fracture) and presence of foaming (found:X, not found:○) were visually evaluated. The MFR (melt flow rate at 190°C) of metallocene polyethylene, high-pressure-produced low-density polyethylene and linear low-density polyethylene was measured according to JIS K 6922-2, Appendix, and the density thereof was measured according to JIS K 6922. The antioxidant in Table 5 was a hindered phenol antioxidant and the processing aid was calcium stearate.

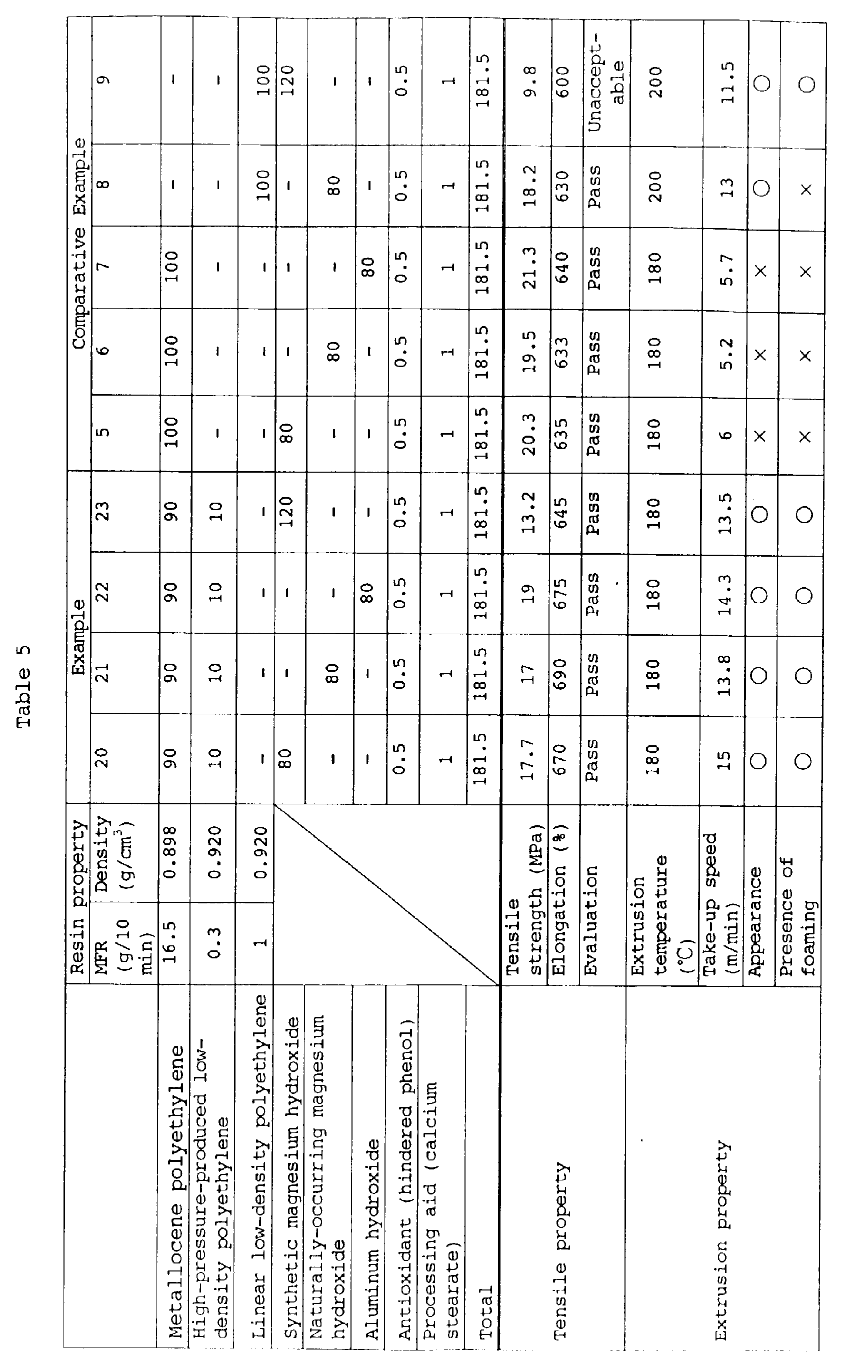

From Table 5, it is known that the flame-resistant resin compositions obtained in Examples 20-23 were superior in tensile property when any of synthetic magnesium hydroxide, naturally-occurring magnesium hydroxide and aluminum hydroxide was used as a flame retardant. An electric wire could be produced efficiently (take-up speed, greater than 13 m/min) by an extruder at an extrusion temperature of 180°C. The coating layer of the electric wire was free of the occurrence of melt fracture or foaming, and a highly reliable electric wire was obtained.

In contrast, in Comparative Examples 5-7 where the base resin component was metallocene polyethylene alone, continuous extrusion of an electric wire could not be achieved unless the take-up speed was set to not more than 6 m/min when an extrusion temperature of the extruder was 180°C, in the case where any of synthetic magnesium hydroxide, naturally-occurring magnesium hydroxide and aluminum hydroxide was used as a flame retardant. The obtained coating layer comprised melt fracture and foaming and the reliability was low. When the base resin component was linear low-density polyethylene alone and naturally-occurring magnesium hydroxide was used as a flame retardant (Comparative Example 8), continuous extrusion of an electric wire could be achieved when the take-up speed was set to not more than 13 m/min and an extrusion temperature of the extruder was set to 200°C. However, the obtained coating layer comprised foaming. When the base resin component was linear low-density polyethylene alone and synthetic magnesium hydroxide was used as a flame retardant (Comparative Example 9), the tensile strength was less than 10 MPa, and sufficient tensile strength could not be achieved.

As is evident from the foregoing explanation, the flame-resistant resin composition of the present invention comprising a base resin made from a polyolefin resin, a specific surface-treated magnesium hydroxide, an acid anhydride-modified polyolefin resin and a rubber without halogen shows improved adhesion between the surface-treated magnesium hydroxide and the base resin in the composition, and therefore, was free of whitening by injury or whitening by bending, and showed superior cold resistance and wear resistance. Accordingly, the flame-resistant resin composition of the present invention is particularly useful as a coating material for an electric wire, which is usable for a coating layer such as a sheath layer, an insulating layer and the like.

The flame-resistant resin composition of the present invention comprising metallocene polyethylene and high-pressure-produced low-density polyethylene as a base resin and an inorganic metal compound is free of a forming failure even when a flame retardant is added in a sufficient amount. The composition allows efficient forming at a low temperature, and shows superior tensile strength and elongation. Therefore, the flame-resistant resin composition of the present invention is particularly useful as a coating material for an electric wire, which is usable for a coating layer, such as a sheath layer, an insulating layer and the like. Consequently, a highly reliable electric wire can be produced with high productivity and at a low cost.

## Claims

1. A flame-resistant resin composition comprising the following Components A to D:
Component A: a polyolefin resin,
Component B: an acid anhydride-modified polyolefin resin,
Component C: at least one member selected from the group consisting of magnesium hydroxide surface-treated with a fatty acid and magnesium hydroxide surface-treated with a coupling agent, and
Component D: a rubber without halogen.

2. The flame-resistant resin composition of claim 1, wherein the coupling agent in Component C is an amino silane coupling agent or an amino titanate coupling agent.

3. The flame-resistant resin composition of claim 1, wherein the polyolefin resin (Component A) is at least one member selected from the group consisting of polyethylene, ethylene-vinyl acetate copolymer, ethylene-methyl acrylate copolymer and ethylene-ethyl acrylate copolymer.

4. The flame-resistant resin composition of claim 1, wherein the polyolefin resin (Component A) is a low-density polyethylene obtained by polymerization using a metallocene catalyst.

5. The flame-resistant resin composition of claim 1, wherein the polyolefin resin (Component A) is a low-density polyethylene obtained by polymerization using a metallocene catalyst, and a high-pressure-produced low-density polyethylene.

6. The flame-resistant resin composition of claim 5, wherein the mixing ratio (A1/A2) of the low-density polyethylene (A1) obtained by polymerization using a metallocene catalyst and the high-pressure-produced low-density polyethylene (A2) is 99/1-70/30 in weight ratio.

7. The flame-resistant resin composition of claim 1, wherein the Component C comprises at least magnesium hydroxide surface-treated with a fatty acid.

8. The flame-resistant resin composition of claim 1, wherein the rubber without halogen (Component D) is at least one member selected from the group consisting of polyisobutylene and an ethylene-vinyl acetate copolymer having a vinyl acetate content of at least 40 wt%.

9. The flame-resistant resin composition of claim 1, wherein the rubber without halogen (Component D) is polyisobutylene.

10. The flame-resistant resin composition of claim 1, wherein the acid anhydride-modified polyolefin resin (Component B) is at least one member selected from the group consisting of an ethylene/maleic anhydride bipolymer and an ethylene/maleic anhydride/acrylate terpolymer.

11. The flame-resistant resin composition of claim 1, wherein the total content of Component C per 100 parts by weight of Component A, Component B and Component D in total is 50-150 parts by weight.

12. The flame-resistant resin composition of any of claim 1 to claim 11, which is a coating material for an electric wire.

13. An electric wire having a sheath layer, an insulating layer or a sheath layer and an insulating layer, which are made from the flame-resistant resin composition of any of claim 1 to claim 11.

14. A flame-resistant resin composition comprising the following Component A1, Component A2 and Component C1:
Component A1: a low-density polyethylene obtained by polymerization using a metallocene catalyst,
Component A2: high-pressure-produced low-density polyethylene, and
Component C1: an inorganic metal compound.

15. The flame-resistant resin composition of claim 14, wherein the inorganic metal compound (Component C1) is at least one member selected from the group consisting of aluminum hydroxide and naturally-occurring magnesium hydroxide.

16. The flame-resistant resin composition of claim 14, wherein the mixing ratio (A1/A2) of Component A1 and Component A2 is 99/1-70/30 in weight ratio.

17. The flame-resistant resin composition of claim 14, wherein the total content of Component C1 per 100 parts by weight of Component A1 and Component A2 in total is 50-150 parts by weight.

18. The flame-resistant resin composition of any of claim 14 to claim 17, which is a coating material for an electric wire.

19. An electric wire having a sheath layer, an insulating layer, or a sheath layer and an insulating layer, which are made from the flame-resistant resin composition of any of claim 14 to claim 17.
